# EUROPEAN PATENT APPLICATION

(11) **EP 4 790 842 A1**
(43) Date of publication of application: **12.08.2026**
(21) Application number: 26153796.3
(22) Date of filing: 23.01.2026
(51) Int. Cl.: H01R 13/422, H01R 13/424, H01R 13/506, H01R 13/52

(54) **ELECTRICAL CONNECTOR**

(30) Priority: 23.01.2025 CN 202510116137
(71) Applicant: Aptiv Connection Systems (Nantong) Ltd., Nantong, Jiangsu 226300 (CN); Aptiv Electrical Centers (Shanghai) Co., Ltd., Shanghai 200184 (CN)
(72) Inventor: TIAN, Xiaoxian, Shanghai (CN)
(74) Representative: Bardehle Pagenberg Partnerschaft mbB Patentanwälte Rechtsanwälte

(57) **Abstract**

According to this disclosure, an electrical connector is proposed. The electrical connector comprises: a main housing with a terminal channel formed therein, and a terminal clamping arm is formed in the terminal channel; and a terminal locking member to be mounted onto the main housing, thereby compressing the terminal clamping arm to deform and therefore apply enhanced locking to the terminal, wherein, the terminal locking member and the main housing have a pre-locking position and a final-locking position.

## Description

### Technical Field

This application belongs to the field of connector technology, particularly, relates to electrical connectors used in automotive electrical and electronic architecture.

### Background Technology

Coaxial connectors are often used as signal connectors in automotive electrical and electronic architectures. A common coaxial connector includes an outer housing, terminal locking component, connector locking components (CPA device), etc. This type of terminal locking component is usually an independent device separate from the outer housing. In the delivery state, the terminal locking component is transported together with the outer housing but not assembled together. The terminal locking component is to be assembled with the outer housing by the end user.

If the terminal locking component mentioned above is not installed into the outer housing, or assembled at a wrong position, it will result in insufficient locking force of the connector, leading to connection failure. Therefore, there is still a need for further improvement in the locking performance and user experience of terminal locking components.

### Summary of Invention

The present application aims to provide an electrical connector with terminal locking member which enhances locking performance and user experience.

According to one aspect of this application, an electrical connector is proposed. The electrical connect comprises: an electrical connector comprising: a main housing with a terminal channel formed therein, and a terminal clamping arm is formed in the terminal channel; and a terminal locking member to be mounted onto the main housing, thereby compressing the terminal clamping arm to deform and therefore apply enhanced locking to the terminal, wherein, the terminal locking member and the main housing have a pre-locking position and a final-locking position.

In the above solution of electrical connector, as an optional implementation, the terminal locking member is side-mounted type.

In the above solution of electrical connector, as an optional implementation, the main housing comprises a front cavity, a middle cavity, and a rear cavity that are connected to each other, and the terminal locking member comprises a terminal pressing plate for entering the middle cavity of the main housing, thereby compressing the terminal clamping arm and causing its deformation.

In the above solution of electrical connector, as an optional implementation, the terminal locking member comprises latching arms located on both sides, and the main housing comprises a pair of first clamping protrusions and a pair of second clamping protrusions located on both sides, when the latching arms are clamped to the first clamping protrusions, the terminal locking member is in the pre-locking position, and when the latching arms are clamped to the second clamping protrusions, the terminal locking member is in the final-locking position.

In the above solution of electrical connector, as an optional implementation, the first clamping protrusion and the second clamping protrusion are located at the rear portion of the main housing.

In the above solution of electrical connector, as an optional implementation, the terminal locking member comprises a first substrate and a second substrate connected to each other, wherein the first substrate is used to be attached to the rear portion of the main housing, and the latching arms are located on both sides of the first substrate.

In the above solution of electrical connector, as an optional implementation, a bottom opening is formed in the middle portion of the main housing, and the second substrate is to seal the bottom opening of the main housing.

In the above solution of electrical connector, as an optional implementation, a terminal pressing plate is formed on the second substrate, and the terminal pressing plate is to enter into the middle cavity through the bottom opening.

In the above solution of electrical connector, as an optional implementation, a boss is formed on the second substrate, and the terminal pressing plate is formed on the boss.

In the above solution of electrical connector, as an optional implementation, a side sealing structure is provided at the bottom opening of the main housing for providing sealing between the boss and the main housing.

In the above solution of electrical connector, as an optional implementation, when the terminal locking member and the main housing are in a pre-locking position, the side sealing structure provides sealing between the protrusion and the main housing.

In the above solution of electrical connector, as an optional implementation, the electrical connector comprises a one-piece integrated seal, the integrated seal comprising a front sealing ring, a rear sealing ring, and a side sealing plate, the side sealing plate serving as the side sealing structure.

### Brief description of the drawings

In order to provide a clearer explanation for the technical solution in the embodiments of the present application, a brief introduction will be given to the drawings required for the description of the embodiments. It is apparent that the drawings described below are only some embodiments of the present application. For those skilled in the art, other drawings can be obtained based on these drawings without creative labor.
Figure 1 is an exploded view of an electrical connector according to an embodiment of the present application.
Figure 2 is a perspective view of the assembled state of the electrical connector shown in Figure 1.
Figure 3 is a perspective view of the main housing in the electrical connector.
Figure 4 is a front view of the front end of the main housing in the electrical connector.
Figure 5 is a longitudinal sectional view of the main housing in the electrical connector.
Figure 6 is a perspective view of the seal in the electrical connector.
Figure 7 is a perspective view of the side mounted terminal locking member in the electrical connector.
Figure 8 is a schematic diagram of the spatial relationship between the side mounted terminal locking member and the seal.
Figure 9 is a front elevation view of electrical connector.
Figure 10 is a cross-sectional view taken along the A-A line in Figure 9.
Figure 11 is a side view of electrical connector.
Figure 12 is a cross-sectional view taken along the line B-B in Figure 11.
Figure 13 is a cross-sectional view taken along the line C-C in Figure 11.

### Embodiments

The following will provide a clear and complete description of the technical solution in the embodiments of the present application, in conjunction with the accompanying drawings. Obviously, the described embodiments are only a part of the embodiments of the present application, not all of them. Based on the embodiments in this application, all other embodiments obtained by those skilled in the art without creative labor are within the scope of protection of this application.

In the description of this application, it should be noted that unless otherwise specified and limited, the terms "connected" and "connected" should be broadly understood, for example, they can be fixed connections, detachable connections, or integrated connections; It can be a mechanical connection, an electrical connection, or communication with each other; It can be directly connected or indirectly connected through an intermediate medium, and it can be a connection within two components or an interaction relationship between two components. For ordinary technical personnel in this field, the specific meanings of the above terms in this application can be understood according to the specific situation. In the description of this application, the meaning of "multiple" refers to two or more, unless otherwise specifically limited. In addition, the terms "first" and "second" are only used for descriptive purposes and cannot be understood as indicating or implying relative importance or implying the number of technical features indicated. Thus, the features limited to "first" and "second" may explicitly or implicitly include one or more features.

The following disclosure provides many different implementation methods or examples to achieve different structures of the present application. In order to simplify the disclosure of this application, specific examples of components and settings are described below. Of course, they are only examples and are not intended to limit the scope of this application.

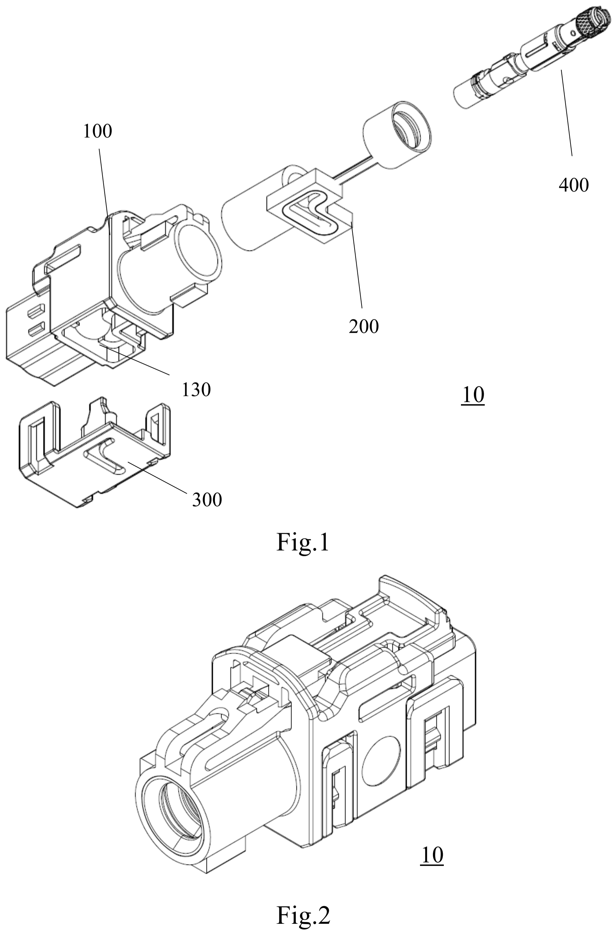

Figure 1 shows an exploded view of an electrical connector 10 according to an embodiment of the present application. As shown in Figure 1, the electrical connector 10 includes a main housing 100, a seal 200, a side-mounted type terminal locking member 300, and a terminal assembly 400 installed in the electrical connector 10. Figure 2 is a perspective view of the assembled state of the electrical connector 10 shown in Figure 1.

It can be understood that the terminal locking member is also referred to as the terminal primary lock reinforcement mechanism, or simply PLR.

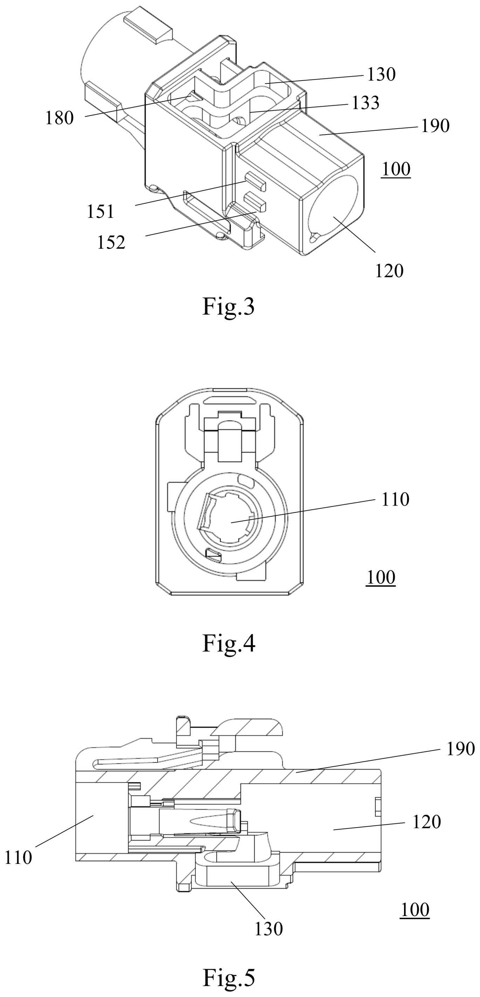

Figure 3 is a perspective view of the main housing 100 in the electrical connector 10, in which the bottom opening 130 and the rear wire entrance inlet 120 of the main housing 100 can be observed.

Figure 4 is a front view of the front end of the main housing 100 in the electrical connector 10. In Figure 4, the front opening 110 of the main housing 100 can be observed.

Figure 5 is a longitudinal sectional view of the main housing 100 in the electrical connector 10. It can be seen that the main housing 100 includes an integrated shell 190, a front opening 110, a bottom opening 130, and a rear wire entrance inlet 120 all formed on the shell 190 of the main housing 100, and these openings are connected to each other.

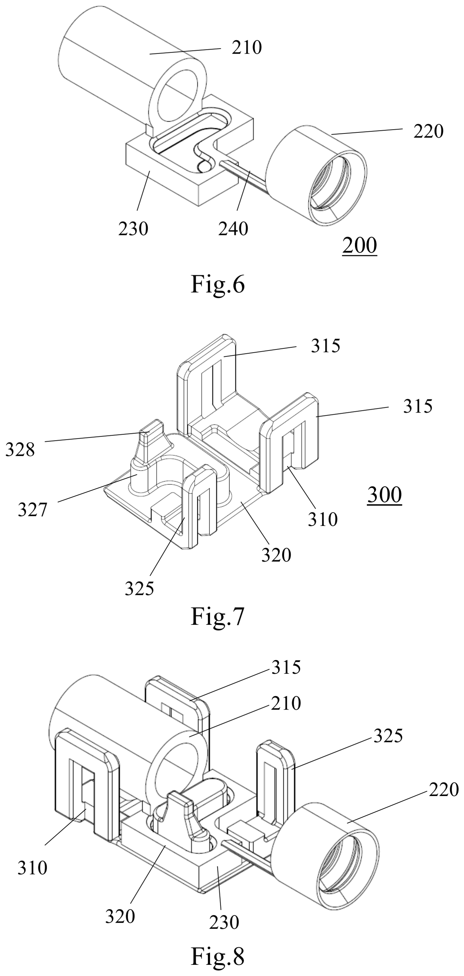

Figure 6 is a perspective view of the seal 200 in the electrical connector 10. As shown in Figure 6, the seal 200 comprises a rear sealing ring 210, a front sealing ring 220, and a side sealing plate 230 serving as the side sealing structure of the main housing 100. The rear sealing ring 210 is connected to the side sealing plate 230, and the side sealing plate 230 is connected to the front sealing ring 220 through a connecting rod 240. Therefore, seal 200 is a one-piece integral part.

Figure 7 is a perspective view of the side mounted terminal locking member 300 in the electrical connector 10, and Figure 8 is a schematic diagram of the spatial relationship between the side mounted terminal locking member 300 and the seal. As shown in Figure 7, the side mounted terminal locking member 300 comprises a substrate structure, for example, the substrate structure may include a first substrate 310 and a second substrate 320 connected to each other.

Referring to Figure 3, the first substrate 310 is to adhere to the rear bearing surface 160 of the bottom of the main housing 100. On both sides of the first substrate 310, a pair of U-shaped latching arms 315 are provided, and the latching arms 315 can be clamped onto the clamping protrusions on the side of the main housing 100 shown in Figure 3. Referring further to Figure 3, latching protrusion at lateral sides of the main housing 100 comprises a first clamping protrusion 151 and a second clamping protrusion 152. The first clamping protrusion 151 is closer to the bottom of the main housing 100 than the second clamping protrusion 152. Therefore, the first clamping protrusion 151 is used for pre-locking, and the second clamping protrusion 152 is used for final-locking.

The second substrate 320 is to seal the bottom opening 130 of the main housing 100. On one side of the second substrate 320, a U-shaped latching arm 325 is formed. Referring to Figure 2, on a single side of the main housing 100, a concave surface is formed, in which a clamping protrusion that cooperates with the U-shaped latching arm 325 is formed. By setting a concave surface formed on a single side, the user can be prompted with the unique and correct assembly position and direction of the side mounted terminal locking member 300.

A boss 327 is further provided on the second substrate 320, and a terminal pressing plate 328 is formed on the boss 327. The terminal pressing plate 328 is used to apply enhanced locking to the terminals of the main housing 100, details of which will be described in conjunction with other figures of this embodiment.

It can be understood that due to the need to avoid the single-sided U-shaped latching arm 325 formed on the second substrate 320, the boss 327 is an asymmetric irregular structure, for example, it is L-shaped as shown in Figure 7. Correspondingly, an L-shaped entrance channel 133 corresponding to the shape of the boss 327 is formed at the bottom opening 130 of the main housing 100 (see Figure 3).

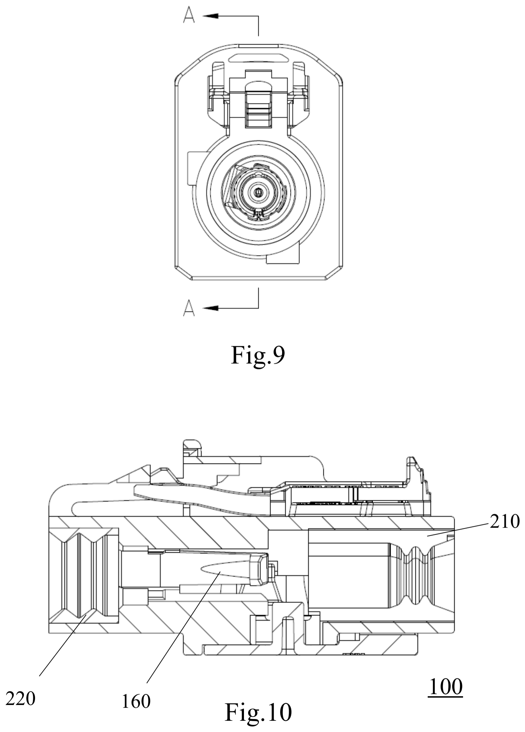

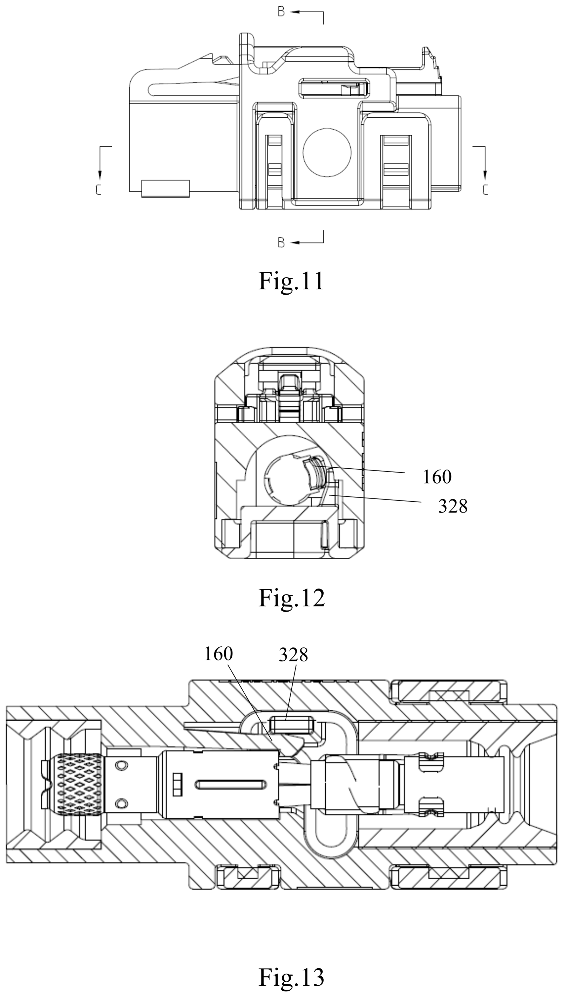

Figure 9 is a front elevation view of electrical connector 10, and Figure 10 is a cross-sectional view taken along the A-A line in Figure 9. Figure 11 is a side view of electrical connector 10, Figure 12 is a cross-sectional view taken along the line B-B in Figure 11, and Figure 13 is a cross-sectional view taken along the line C-C in Figure 11.

Based on Figure 10 and Figures 12-13, it can be understood that a terminal clamping arm 160 is provided in the terminal channel structure of the main housing 100. External force can cause the free end of the terminal clamping arm 160 to make it move towards the terminal channel. When the side-mounted terminal locking member 300 is installed into the main housing 100 and is in the final-locking position provided by the second clamping protrusion 152, the terminal pressing plate 328 can press the terminal clamping arm 160 in the main housing 100 from a lateral side, causing its free end to move into the terminal channel, thereby applying enhanced locking to the terminal installed into the main housing 100.

It can be understood that when the side mounted terminal locking member 300 is installed into the main housing 100 and in the pre-locking position provided by the first clamping protrusion 151, the terminal clamping arm 160 has not yet been compressed by the terminal pressing plate 328, and therefore has not undergone deformation.

It can be understood that the opening shape on the side sealing plate 230 of the sealing element 200 matches with the boss 327. Therefore, when the side mounted terminal locking member 300 and the main housing 100 are in the pre-locked position, a waterproof sealing effect is provided.

As an optional implementation, the seal 200 and the main housing 100 can be made through co-molding process, thereby reducing production process steps and assembly operation steps. Correspondingly, as shown in Figure 3, a connecting hole 180 can be formed on the main housing 100 to connect the front portion and middle portion of the housing, thereby facilitating the integrated molding of the front sealing ring 220, side sealing plate 230, and connecting rod 240 of the seal 200.

The above provides a detailed introduction to a connector provided in the embodiments of the present application. Specific examples are applied in the present application to explain the principles and implementation methods of the present application. The above embodiments are only used to help understand the technical solution and core idea of the present application; Ordinary technical personnel in this field should understand that they can still modify the technical solutions described in the aforementioned embodiments, or equivalently replace some of the technical features; And these modifications or substitutions do not deviate from the essence of the corresponding technical solutions from the scope of the technical solutions of the various embodiments of the present application.

## Claims

1. An electrical connector comprising:
a main housing (100) with a terminal channel formed therein, and a terminal clamping arm (160) is formed in the terminal channel; and
a terminal locking member (300) to be mounted onto the main housing (100), thereby compressing the terminal clamping arm (160) to deform and therefore apply enhanced locking to the terminal,
wherein, the terminal locking member (300) and the main housing (100) have a pre-locking position and a final-locking position.

2. The electrical connector as claimed in claim 1, **characterized in that** the terminal locking member (300) is side-mounted type.

3. The electrical connector as claimed in claim 1 or 2, **characterized in that** the main housing (100) comprises a front cavity, a middle cavity, and a rear cavity that are connected to each other, and the terminal locking member (300) comprises a terminal pressing plate (328) for entering the middle cavity of the main housing (100), thereby compressing the terminal clamping arm (160) and causing its deformation.

4. The electrical connector as claimed in any one of the preceding claims, **characterized in that** the terminal locking member (300) comprises latching arms (315) located on both sides, and the main housing (100) comprises a pair of first clamping protrusions (151) and a pair of second clamping protrusions (152) located on both sides, when the latching arms (315) are clamped to the first clamping protrusions (151), the terminal locking member (300) is in the pre-locking position, and when the latching arms (315) are clamped to the second clamping protrusions (152), the terminal locking member (300) is in the final-locking position.

5. The electrical connector according to claim 4, **characterized in that** the first clamping protrusion (151) and the second clamping protrusion (152) are located at the rear portion of the main housing (100).

6. The electrical connector according to claim 4 or 5, **characterized in that** the terminal locking member (300) comprises a first substrate (310) and a second substrate (320) connected to each other, wherein the first substrate (310) is used to be attached to the rear portion of the main housing (100), and the latching arms (315) are located on both sides of the first substrate (310).

7. The electrical connector according to claim 6, **characterized in that** a bottom opening (130) is formed in the middle portion of the main housing (100), and the second substrate (320) is to seal the bottom opening (130) of the main housing (100).

8. The electrical connector according to claim 6 or 7, **characterized in that** a terminal pressing plate (328) is formed on the second substrate (320), and the terminal pressing plate (328) is to enter into the middle cavity through the bottom opening (130).

9. The electrical connector according to claim 8, **characterized in that** a boss (327) is formed on the second substrate (320), and the terminal pressing plate (328) is formed on the boss (327).

10. The electrical connector according to claim 9, **characterized in that** a side sealing structure is provided at the bottom opening (130) of the main housing (100) for providing sealing between the boss (327) and the main housing (100).

11. The electrical connector according to claim 10, **characterized in that** when the terminal locking member (300) and the main housing (100) are in a pre-locking position, the side sealing structure provides sealing between the protrusion (327) and the main housing (100).

12. The electrical connector according to claim 11, **characterized in that** the electrical connector comprises a one-piece integrated seal (200), the integrated seal (200) comprising a front sealing ring (220), a rear sealing ring (210), and a side sealing plate (230), the side sealing plate (230) serving as the side sealing structure.
